# EUROPÄISCHE PATENTSCHRIFT

(11) **EP 1 152 064 B1**
(45) Veröffentlichungstag und Bekanntmachung des Hinweises auf die Patenterteilung: **13.07.2005**
(21) Anmeldenummer: 01250123.5
(22) Anmeldetag: 05.04.2001
(51) Int. Cl.: C21C 5/36, C21B 3/06, C04B 5/00, C04B 18/14, C21B 3/08, C04B 7/147

(54) **Verfahren zur Herstellung eines Granulats aus Konverterschlacke durch Verblasen mit Luft**
Process of granulating converter steel slag by air jetting
Procédé de granulation du laitier de convertisseur par soufflage à l'air

(30) Priorität: 05.05.2000 DE 10023074
(43) Veröffentlichungstag der Anmeldung: 07.11.2001
(73) Patentinhaber: Mannesmannröhren-Werke AG, 45473 Mülheim a.d. Ruhr (DE)
(72) Erfinder: Kaiser, Heinz-Peter, Dr., 47506 Neukirchen-Vluyn (DE); Höning, Manfred, Dipl.-Ing, 47509 Rheurdt (DE)
(74) Vertreter: Meissner, Peter E., Dipl.-Ing.

(56) Entgegenhaltungen:
- EP-A- 0 542 330
- FR-A- 2 527 940
- US-A- 4 671 752
- DATABASE WPI Section Ch, Week 198338 Derwent Publications Ltd., London, GB; Class L02, AN 1983-768751 XP002208354 & JP 58 137498 A (NIPPON JIRYOKU SENKO KK) , 15. August 1983 (1983-08-15)
- DATABASE WPI Section Ch, Week 198002 Derwent Publications Ltd., London, GB; Class L02, AN 1980-02724C XP002208355 & JP 54 151503 A (NIPPON KOKAN KK), 28. November 1979 (1979-11-28)

## Beschreibung

Die Erfindung betrifft ein Verfahren zur Herstellung eines Granulats aus Konverterschlacke gemäß dem Oberbegriff des Patentanspruches 1.

Die Herstellung von Granulaten aus Schlacke ist aus zahlreichen Veröffentlichungen bekannt.
So beschreibt die JP-A-58137498 ein Verfahren, bei dem eine hochbasische flüssige Stahlschlacke durch einen Luftstrahl verdüst wird. Das erhaltene Produkt wird mit Gips vermischt.
Ein weiteres Verfahren zur Herstellung eines Granulates aus Konverterschlacke durch Verdüsen mit Luft ist aus der JP-A-54151503 bekannt.
Schüeßlich sei noch die FR-A-2527940 erwähnt, die ebenfalls das Verdüsen einer flüssigen Schlacke zur Herstellung eines Granulates beschreibt.
Ein gattungsbildendes Verfahren ist bekannt durch einen Aufsatz von H.W. Gudenau, K.H. Lindner und H. Maas in Fachberichte "Hüttenpraxis Metallweiterverarbeitung, Vol. 21, Nr. 10, 1983, Seite 859, 860". Bei diesem unter dem Begriff "Luft-Zerkleinerungs-Verfahren" lautenden Verfahren wird heiße Schlacke aus einer Schlackenpfanne in eine Rinne gekippt. Mit einem großen Gebläsewind wird ein starker Luftstrom erzeugt. Aus speziell konzipierten Düsen, die vom an der Rinne angebracht sind, tritt dieser Luftstrom mit hoher Geschwindigkeit aus und bläst die flüssige Schlacke in einen Kessel hinein. Sie wird dabei in Form von Kügelchen oder Pellets (Durchmesser 0,3 bis 3 mm) zerteilt. Mit dieser Granulationsanlage soll in erster Linie ein großer Teil der in der flüssigen Schlacke enthaltenen Wärme zurückgewonnen werden. Bei der konkreten in Japan gebauten Anlage werden 40 bis 45% der Gesamtwärme der Schlacke ausgenutzt. Das Granulat selbst ist ein Abfallprodukt und kann als Großsand oder als Strahlmittel verwendet werden.

Aus metallurgischen Gründen ist in Konverterschlacken ein Anteil chemisch ungebundenen Kalks enthalten. Da dieser so genannte freie Kalk unter Volumenzunahme Wasser aufnehmen kann, bestimmt sein Anteil maßgeblich die Raumbeständigkeit und somit die Verwendbarkeit von Konverterschlacke für viele Anwendungen, z.B. als Zementzuschlagstoff.

Ein Verfahren zur Reduzierung des freien Kalkgehaltes ist aus der EP 0 542 330 A1 bekannt. Bei diesem Verfahren wird Konverterschlacke mittels eines auf die Schlacke gerichteten Wasserstrahles granuliert. Zur Vermeidung von Explosionen beim Kontakt von Wasser mit dem in der Konverterschlacke enthaltenen flüssigen Stahlresten müssen diese weitestgehend abgetrennt werden. Die Konverterschlacke wird hierzu abgekühlt und gebrochen, bevor sie zur eigentlichen Granulation wieder aufgeheizt wird. Bei diesem Verfahren wird eine Konverterschlacke verwendet mit einem Gehalt an freiem Kalk im Bereich von 5 bis 6 Gew. % und einem Gehalt an metallischem Eisen von ca. 2 Gew %. Die mittlere Dichte der granulierten Schlacke liegt bei unter 1kg/dm³ und der Gehalt an freiem Kalk liegt bei unter 1 Gew. % vorzugsweise bei unter 0,2 Gew. %. Dieses so erzeugte Granulat wird gemahlen und in eine eisenreiche und in eine eisenarme Fraktion geteilt. Die eisenreiche Fraktion wird als Rohmaterial zur Roheisenherstellung genutzt. Die eisenarme Fraktion dient als Baumaterial für Straßen und Deiche, als poröser Leichtzuschlag für Beton oder als hydraulisch aktives Bindemittel.

Aufgabe der Erfindung ist es ein einfaches und kostengünstiges Verfahren zur Herstellung eines dichten raumbeständigen Granulats aus Konverterschlacke anzugeben, das geringe Gehalte an freiem Kalk aufweist und als Zuschlagstoff zur Herstellung von Beton oder Mörtel geeignet ist.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung ist der Massestrom der Luft zum Massestrom der aus- bzw. herabfließenden Konverterschlacke so eingestellt, dass die zuerst noch flüssigen Teilchen der Konverterschlacke weitgehend in der Luft erstarrt sind bevor sie auf eine Unterlage (Granulatsammelfläche) aufschlagen, wobei sich eine Fraktionierung in ein eisenreiches und in ein eisenarmes, dichtes, raumbeständiges Granulat mit einer mittleren Dichte >1 kg/dm³ ergibt, das unter Ausnutzung des in der Konverterschlacke enthaltenden Eisenoxide einen niedrigen Gehalt an freiem Kalk aufweist, der den Anforderungen als Zuschlagstoff zur Herstellung von Beton oder Mörtel entspricht, wobei eine Konverterschlacke mit einem Gehalt an freiem Kalk vor dem Verblasen im Bereich von 2 bis 5 Gew.% eingesetzt wird.

Die vorgeschlagene Verfahrensweise hat den Vorteil, dass mit dem Medium Luft eine gefahrlose Granulierung und gleichzeitig eine Fraktionierung erreicht wird und auf die aufwendige vorherige Abtrennung der in der Konverterschlacke enthaltenen flüssigen Stahlreste verzichtet werden kann. Weiterhin wird das in der Konverterschlacke enthaltene Eisenoxid für die Absenkung des Gehaltes an freiem Kalk im Granulat genutzt. Ein weiterer Vorteil der vorgeschlagenen Verfahrensweise ist darin zu sehen, dass das so erzeugte Granulat den Anforderungen als Zuschlagstoff zur Herstellung von Beton oder Mörtel entspricht und somit auf die Gewinnung von Sand oder Kies als Zuschlagstoff verzichtet werden kann und die ansonsten nur für den Straßenbau zu verwendende Konverterschlacke vorteilhaft eingesetzt werden kann. Dabei fallen erstens keine Kosten für die Gewinnung von Sand oder Kies an. Zweitens werden die Entsorgungskosten für die Konverterschlacke eingespart. Selbst wenn man die zusätzlichen Kosten zur Herstellung des Granulats mittels Verblasen mit Luft einrechnet, bleibt unter dem Strich ein nicht zu unterschätzender Kostenvorteil übrig. Bei dieser Rechnung sind die sich über längere Zeiträume verteilenden Kosten für die Erschließung von Kiesgruben und deren anschließende Rekultivierung nicht mit eingerechnet

Auch in früheren Zeiten hat es immer wieder Versuche gegeben, für die Konverterschlacke andere Verwendungsgebiete als den Straßenbau zu erschließen. Sie sind größtenteils daran gescheitert, dass der Gehalt an freiem Kalk in der Konverterschlacke zu hoch war (DE-AS 129 30 72). Freier Kalk in der Schlacke führt in Verbindung mit Wasser zur Aufblähung, ein Effekt der für viele Verwendungszwecke nicht akzeptabel ist. Die vorgeschlagene Verfahrenstechnik macht es aber möglich, ein Granulat zu erzeugen, dessen Gehalt an freiem Kalk (CaO) unter 0,4 Gew. % liegt.

Aus der EP 0 542 330 A1 ist zwar ein Verfahren bekannt, mit dem man auch sehr niedrige Gehalte an freiem Kalk im Granulat erzeugen kann, jedoch verhinderten die verfahrenstechnischen Nachteile des Einsatzes von Wasser bislang eine verbreitete Anwendung. Insbesondere die für dieses Verfahren notwendige Abkühlung und Zerkleinerung zur Abtrennung des Metallanteils und die dadurch bedingte Wiederaufheizung vor der Granulation wirkt sich nachteilig auf die Wirtschaftlichkeit des Verfahrens aus. In diesem Zusammenhang hat die Anmelderin erkannt, dass der Einsatz von Luft als Granulationsmedium und die Reaktion der Luft mit der Konverterschlacke ein entscheidender Parameter zur Erzielung eines niedrigen Gehaltes an freiem Kalk im Granulat ist. Untersuchungen und Überlegungen haben ergeben, dass man es beim Verblasen mit einem sehr komplexen Vorgang im metastabilen Zustand zu tun hat, wobei die Verschiebung des Oxidationsgrades des Eisens und die damit einhergehende Veränderung der Bindungsverhältnisse ein wesentlicher Effekt ist. Aus diesem Grunde ist die Abstimmung der Massenströme von Konverterschlacke und Blasluft von entscheidender Bedeutung, wobei sichergestellt werden muss, dass die zuerst noch flüssigen Teilchen der Konverterschlacke weitgehend in der Luft erstarrt sein müssen, bevor sie auf die Unterlage aufschlagen.

## Patentansprüche

1. Verfahren zur Herstellung eines Granulats aus Konverterschlacke bei dem gegen den Strahl einer aus- bzw. herabfließenden Konverterschlacke ein starker Luftstrom gerichtet wird,
**dadurch gekennzeichnet,**
**dass** der Massestrom der Luft zum Massestrom der aus- bzw. herabfließenden Konverterschlacke so eingestellt ist, dass die zuerst noch flüssigen Teilchen der Konverterschlacke weitgehend in der Luft erstarrt sind bevor sie auf eine Unterlage (Granulatsammelfläche) aufschlagen, wobei sich eine Fraktionierung in ein eisenreiches und in ein eisenarmes, dichtes, raumbeständiges Granulat mit einer mittleren Dichte >1 kg/dm³ ergibt, das unter Ausnutzung des in der Konverterschlacke enthaltenden Eisenoxides einen niedrigen Gehalt an freiem Kalk aufweist, der den Anforderungen als Zuschlagstoff zur Herstellung von Beton oder Mörtel entspricht, wobei eine Konverterschlacke mit einem Gehalt an freiem Kalk vor dem Verblasen im Bereich von 2 bis 5 Gew.% eingesetzt wird.

2. Verfahren nach Anspruch 1,
**dadurch gekennzeichnet,**
**dass** der Gehalt an freiem Kalk auf < 0,4 Gew. % eingestellt wird.

3. Verfahren nach den Ansprüchen 1 bis 2,
**dadurch gekennzeichnet,**
**dass** durch das Verblasen ein Granulat mit einer Körnung größtenteils im Bereich von 0,2 bis 2 mm mit einigen Anteilen auch > 2 mm, hergestellt wird.

## Claims

1. A method for producing granules from converter slag, in which a powerful air stream is directed against the jet of a converter slag which flows outwards or downwards,
**characterised in that**
the mass flow of the air relative to the mass flow of the converter slag which flows outwards or downwards is adjusted such that the initially still-liquid particles of the converter slag are largely solidified in the air before impacting on a substrate (granule collecting surface), whereupon fractionation into iron-rich and low-iron, dense granules of constant volume and of an average density of > 1 kg/dm³ is brought about, which, utilising the iron oxide contained in the converter slag, has a low content of free lime which meets the requirements as an aggregate for the production of concrete or mortar, a converter slag with a content of free lime before converting in the range of 2 to 5% by weight being used.

2. A method according to Claim 1, **characterised in that** the content of free lime is set to < 0.4% by weight.

3. A method according to Claims 1 to 2, **characterised in that** granules having a grain size for the most part in the range from 0.2 to 2 mm with some contents also being > 2 mm is produced by the converting.

## Revendications

1. Procédé pour fabriquer un granulat à partir de laitier de convertisseur, dans lequel un fort courant d'air est dirigé contre le jet d'un laitier de convertisseur sortant en s'écoulant vers le bas,
**caractérisé en ce que** le débit massique de l'air par rapport au débit massique du laitier de convertisseur sortant en s'écoulant vers le bas est réglé de manière à ce que les particules d'abord encore liquides du laitier de convertisseur soient solidifiées largement dans l'air avant qu'elles ne tombent sur un support (surface recueillant les granulats), un fractionnement s'opérant entre un granulat riche en fer et un granulat pauvre en fer, dense, de volume constant, d'une densité moyenne supérieure à 1 kg/dm3 qui présente, en utilisant l'oxyde de fer contenu dans le laitier de convertisseur, une teneur faible en chaux libre qui correspond aux exigences en tant qu'agrégat pour fabriquer du béton ou du mortier, le laitier de convertisseur utilisé ayant une teneur en chaux libre située dans la plage allant de 2 à 5 % en poids avant le traitement par soufflage.

2. Procédé selon la revendication 1,
**caractérisé en ce que** la teneur en chaux libre est fixée à moins de 0,4 % en poids.

3. Procédé selon les revendications 1 à 2,
**caractérisé en ce que** le traitement par soufflage permet de fabriquer un granulat d'une granulométrie située pour la majeure partie dans la plage allant de 0,2 à 2 mm avec aussi quelques fractions supérieures à 2 mm.
